# EUROPÄISCHE PATENTSCHRIFT

(11) **EP 3 725 714 B1**
(45) Veröffentlichungstag und Bekanntmachung des Hinweises auf die Patenterteilung: **03.09.2025**
(21) Anmeldenummer: 20169907.1
(22) Anmeldetag: 16.04.2020
(51) Int. Cl.: B65G 65/32, B65G 69/04

(54) **SPEICHEREINRICHTUNG FÜR SCHÜTTGUT, INSBESONDERE HOLZSPÄNE, UND BEFÜLLVERFAHREN**
STORAGE DEVICE FOR BULK MATERIAL, IN PARTICULAR WOOD CHIPS, AND FILLING METHOD
DISPOSITIF DE STOCKAGE POUR UNE MATIÈRE EN VRAC, EN PARTICULIER COPEAUX DE BOIS, ET PROCÉDÉ DE REMPLISSAGE

(30) Priorität: 16.04.2019 DE 102019110001
(43) Veröffentlichungstag der Anmeldung: 21.10.2020
(73) Patentinhaber: Bruns Holding GmbH & Co. KG, 26689 Apen (DE)
(72) Erfinder: Woltermann, Jan, 26789 Leer (DE); Müller, Christian, 26689 Apen-Augustfehn (DE)
(74) Vertreter: Eisenführ Speiser

(56) Entgegenhaltungen:
- DE-A1- 3 935 770
- FR-A- 1 369 564
- US-A- 3 780 886
- US-A- 5 040 941
- US-A- 5 324 158

## Beschreibung

Die vorliegende Erfindung betrifft eine Speichereinrichtung für Schüttgut, insbesondere Holzspäne, umfassend einen Bunker zum Aufnehmen des Schüttguts und eine Fördervorrichtung zum Transportieren des Schüttguts, wobei die Fördervorrichtung innerhalb des Bunkers angeordnet ist.

Weiterhin betrifft die Erfindung ein Verfahren zur Steuerung einer gleichmäßigen Befüllung eines Bunkers einer Speichereinrichtung.

US 5 324 158 A und US 3 780 886 A offenbaren Vorrichtungen zum Befüllen eines Silos mit Tabak oder dergleichen. Fotozellen werden verwendet, um die Füllhöhe zu Detektieren. US 5 040 941 A offenbart eine Vorrichtung zum Befüllen eines Bunkers mit Schüttgut, wobei eine Sensoreinheit zum Ermitteln eines Füllstandes eingesetzt wird. DE 39 35 770 A1 offenbart eine Vorrichtung zum Beschicken von Behältern mit Schüttgut, insbesondere faserigen Stoffen, wie Heu, Silage usw., wobei Linearfördervorrichtungen zum Einsatz kommen. US 5 324 158 A offenbart eine Speichereinrichtung nach dem Oberbegriff des Anspruchs 1.

Speichereinrichtungen der eingangs genannten Art werden beispielsweise in der Spanplattenindustrie eingesetzt. Hierbei werden insbesondere für die Produktion von OSB-Platten (engl.: oriented strand board) sogenannte Nass- und Trockenspanbunker eingesetzt. Diese dienen zum einen dazu, einen Zwischenpuffer zu erzeugen, um bei einem Messerwechsel eines vorgelagerten Zerspaners die Produktion aufrecht zu erhalten, und zum anderen dazu, einen konstanten Produktstrom für den weiteren Prozess zu generieren. Dies ist aufgrund der Intervallzerspanung des Zerspaners notwendig.

Herkömmlich ist eine solche Speichereinrichtung mit einem Kettenrechenförderer ausgestattet. Ein Nachteil besteht darin, dass ein Kettenrechenförderer besonders wartungsintensiv ist. Während der Produktion kann es zum Herausreißen der Rechen aus dem Kettenrechenförderer kommen, so dass diese Rechen in den Bunker und den nachfolgenden Fertigungsprozess gelangen. Hier verursachen diese Rechen einen erheblichen Schaden und führen zum Stillstand der Anlage. Des Weiteren werden die transportierten Späne durch den Kettenrechenförderer mechanisch strapaziert und beschädigt. Vorwiegend bei der Herstellung von OSB-Platten sind im Besonderen grobe und lange Späne erforderlich, um die geforderte Biegesteifigkeit zu erreichen. Nachteilig ist außerdem, dass dieses System sehr energiebedürftig ist, da die Rechen das komplette Fördergut abstreifen müssen.

Außerdem ist eine gleichmäßige Befüllung des Bunkers mit Schüttgut eine besondere Herausforderung. Bei einer stationär eingestellten Abwurfposition fällt das Schüttgut je nach Schüttgutart in einen einzelnen spezifischen Schüttguthaufen. Aufgrund des charakteristischen Winkels des Schüttguthaufens wäre ein maximaler Befüllungszustand nicht erreichbar. Der gesamte Befüllungszustand des Bunkers ist außerdem abhängig von der Schüttgutart sowie der Gleichmäßigkeit der Verteilung des zugeführten Schüttgut-Förderstroms, dies betrifft sowohl die Größe und Form der einzelnen Partikel als auch die Menge pro Zeit des Förderstroms. Es ist dementsprechend besonders für Schüttgut mit unregelmäßiger Größenverteilung der Partikel sowie für Schüttgut-Mischungen mit unterschiedlicher Dichteverteilung der einzelnen Komponenten problematisch, das Schüttgut bedarfsgerecht im Bunker anzuordnen.

Es besteht dementsprechend Bedarf an einer Lösung zur Beseitigung dieser Nachteile. Aufgabe der vorliegenden Erfindung ist es daher, eine Speichereinrichtung bereitzustellen, die bezüglich der oben genannten Probleme wenigstens teilweise verbessert ist und insbesondere eine gleichmäßige und schonende Verteilung des Schüttguts vorzugsweise mit geringem Energieaufwand ermöglicht.

Die Aufgabe wird in einem ersten Aspekt von einer Speichereinrichtung mit den Merkmalen des Anspruchs 1 gelöst, wobei die Fördervorrichtung ein Gurtförderer zum Transportieren des Schüttguts ist. Gurtförderer sind geeignet, das auf einem Gurtband transportierte Schüttgut besonders materialschonend zu transportieren. Aufgrund des verwendeten gummiähnlichen Materials des Gurtbands wird ausreichend Haftreibung zwischen dem Schüttgut und dem Gurtband erzeugt, um dieses entlang einer Förderrichtung zu transportieren. Es kann folglich auf den Einsatz von Mitnehmern oder dergleichen verzichtet werden, die das transportierte Schüttgut erheblich mechanisch beanspruchen können, sodass es beschädigt würde. Besonders vorteilhaft sind außerdem die Wartungsarmut und der vergleichsweise geringe Energieaufwand eines Gurtförderers. Aufgrund der einteiligen Ausbildung des charakteristischen Endlosförderbands ist die Wahrscheinlichkeit geringer, dass sich in der besonders staubigen Atmosphäre mit vielen kleinen und kleinsten Partikeln Ablagerungen ansammeln oder sich verhaken. Die erfindungsgemäße Speichereinrichtung weist mindestens eine Sensoreinheit zum Detektieren eines örtlichen Befüllungszustands in dem Bunker innerhalb des Bunkers angeordnet ist. Der Einsatz von Sensoreinheiten ermöglicht eine ständige Überwachung verschiedener relevanter Parameter, beispielsweise eine Füllstandshöhe, ein Füllvolumen oder die Gleichmäßigkeit der Befüllung mit Schüttgut im Bunker, zur Erzielung einer optimalen Befüllung des Bunkers mit Schüttgut. Mindestens eine der Sensoreinheiten ist an dem Gurtförderer und/oder der Verfahreinrichtung befestigt zum Detektieren einer Füllstandshöhe relativ zu der Position des Gurtförderers. Die Positionierung an der Verfahreinrichtung ermöglicht eine Überwachung der gesamten Länge des Bunkers mit Hilfe einer minimalen Anzahl an Sensoreinheiten.

Der Bunker weist einen in dessen oberen Bereich angeordneten Einlass auf, wobei der Gurtförderer mindestens teilweise unter dem Einlass in dem Bunker angeordnet ist. Ein Gurtförderer, der innerhalb eines Bunkers angeordnet ist, hat den Vorteil, den Bunkerinnenraum mit einem hohen Befüllungsgrad zu befüllen. Des Weiteren können individuelle Abwurfpositionen erreicht werden unabhängig von der Position des Einlasses.

Der Gurtförderer ist mittels einer Verfahreinrichtung innerhalb des Bunkers verfahrbar. Mit Hilfe der Verfahreinrichtung kann eine nahezu beliebige Abwurfposition des Schüttguts eingestellt werden. Dies ermöglicht eine gleichmäßige, vollständige und positionsgenaue Befüllung des Bunkers mit Schüttgut.

Gemäß einer bevorzugten Ausführungsform wird vorgeschlagen, dass die Speichereinrichtung eine außerhalb des Bunkers angeordnete Zuführfördervorrichtung zum Zuführen des Schüttguts auf den Gurtförderer durch den Einlass des Bunkers aufweist. Die Zuführfördervorrichtung ermöglicht in einfacher Weise ein mengengesteuertes Zuführen von Schüttgut durch den Einlass des Bunkers. Der zugeführte Schüttgutstrom kann über die Geschwindigkeit des Förderbands je nach Bedarf reguliert werden. Des Weiteren ist über die Breite des Zuführförderers die Breite des Schüttgutstroms ebenfalls regulierbar, wonach auch der Grad der Gleichmäßigkeit der Befüllung indirekt beeinflusst wird.

Vorzugsweise weist die Verfahreinrichtung einen Antrieb und Schienen, auf denen der Gurtförderer beweglich gelagert ist, auf. Ein robustes mechanisches Liniearführungssystem ist zweckmäßig, um eine geringe Störanfälligkeit zu realisieren.

In einer weiteren bevorzugten Ausführungsform umfasst der Gurtförderer einen reversierbaren Antrieb zum Transportieren des Schüttguts in eine erste Richtung und in eine zweite entgegengesetzte Richtung. Hiernach ist es, insbesondere in Kombination mit der Verfahreinrichtung des Gurtförderers, möglich, nahezu beliebig viele Abwurfpositionen für das Schüttgut und damit eine gut verteilte und vollständige Befüllung im Bunker zu realisieren. Der besondere Vorteil der Drehrichtungsumkehr ermöglicht es auch erst Abwurfpositionen entlang der gesamten Länge des Bunkers zu erreichen. Außerdem kann das System schnell und flexibel reagieren.

Eine weitere bevorzugte Ausführungsform ist gekennzeichnet durch eine Steuerung zur Steuerung von Komponenten der Speichereinrichtung, die signalleitend mit dem Gurtförderer, der Verfahreinrichtung und mindestens einem Sensor gekoppelt ist. Eine solche Steuerung ermöglicht eine bedarfsgerechte Schüttgutbefüllung des Bunkers. Anhand verschiedener Steuerungsparameter, wie beispielsweise der Position des Gurtförderers, der Geschwindigkeit oder Laufrichtung des Förderbands oder des Befüllungszustands des Bunkers, ist die Befüllung des Bunkers mit Schüttgut funktional und teilweise oder vollständig automatisiert steuerbar, wobei der mindestens eine Sensor, vorzugsweise mehrere Sensoren, Informationen über den Befüllzustand an einem Ort oder mehreren Orten bereitstellen. Anstelle einer Steuerung ist auch eine Regelung einsetzbar zur Regelung des Befüllungszustands des Bunkers. Eine Regelung ermöglicht, den Befüllungszustand kontinuierlich mittels der Sensoreinheiten zu erfassen und daraufhin über den geschlossenen Regelkreis Befüllungszustand kontinuierlich zu beeinflussen. Ferner ist bevorzugt, dass eine Position des Gurtförderers mittels mindestens einem Weg-Sensor entlang einer vorzugsweise horizontalen Achse innerhalb des Bunkers bestimmbar und mittels der Steuerung veränderbar ist.

In einer weiteren bevorzugten Ausführungsform der Erfindung ist ein zweiter Gurtförderer innerhalb des Bunkers angeordnet. Besonders bei groß-dimensionierten Bunkern ist es vorteilhaft, mehrere Gurtförderer zur Verteilung von Schüttgut innerhalb des Bunkers einzusetzen, um zum einen die zeitliche Komponente positiv zu beeinflussen und zum anderen den Grad der Gleichmäßigkeit der Befüllung zu erhöhen.

Besonders bevorzugt sind der erste und zweite Gurtförderer im Wesentlichen entlang einer horizontalen Achse hintereinander oder nebeneinander angeordnet und verfahrbar. Eine Anordnung von zwei hintereinander befindlichen Gurtförderern ist besonders bei langen Bunkern von Vorteil, eine Anordnung von zwei nebeneinander befindlichen Gurtförderern bei besonders breiten Bunkern. Zweckmäßigerweise können die zwei Gurtförderer mittels der Zuführfördervorrichtung abwechselnd oder gleichzeitig mit Schüttgut beaufschlagt werden.

Besonders bevorzugt ist jeweils eine erste Sensoreinheit an einem Ende des Gurtförderers befestigt und eine zweite Sensoreinheit an einem zweiten Ende des Gurtförderers befestigt zum Detektieren der Füllstandshöhe an einer ersten Abwurfposition und an einer zweiten Abwurfposition des Schüttguts von dem Gurtförderer. Diese Befestigungsposition der Sensoreinheit ist geeignet, eine Überwachung am Ort des Geschehens, d. h. an der Abwurfposition zu realisieren. Hiernach kann der ermittelte Wert des Sensors ein direktes Feedback der Aktion an eine Steuerung übermitteln, wonach die Parameter des Gurtförderers, insbesondere die Verfahrposition, die Drehrichtung und die Fördergeschwindigkeit, gezielt gesteuert werden können

Weiterhin ist bevorzugt, dass mindestens eine der Sensoreinheiten an einer Bunkerwand befestigt ist. Die Entnahmestelle des Bunkers befindet sich zumeist in einem vorderen Bereich des Bunkers, wonach es sinnvoll ist, den Bunker von einem vorderen Bereich zu einem hinteren Bereich zu füllen. Die Anordnung einer Sensoreinheit an einer Bunkerwand, insbesondere an einer hinteren Bunkerwand, gibt demnach Auskunft über den gesamten Befüllungszustand des Bunkers.

Vorzugsweise ist mindestens eine der Sensoreinheiten ein Radarsensor. Ein besonderer Vorteil von Radarsensoren ist es, Objekte, in diesem Fall einen Schüttguthaufen, auf großen Distanzen zielsicher und unabhängig von Störobjekten zu erfassen. Des Weiteren wird ein stabiles Messsignal generiert, welches auch in staubiger Atmosphäre oder bei Verschmutzungen auf der Sensorkappe schnelle Messungen und kurze Reaktionszeiten auf Positionsveränderung ermöglicht.

Weiterhin ist es mit Blick auf eine gewünschte möglichst vollständige Befüllung des Bunkers bevorzugt, dass der Gurtförderer ein Förderband mit einer Breite aufweist, die mindestens 50 % der Breite des Bunkers beträgt, bevorzugt eine Breite größer als 75 % der Bunkerbreite und besonders bevorzugt eine Breite größer 85 % der Bunkerbreite aufweist. Um einen möglichst gleichmäßigen Förderstrom zu erzeugen, ist es zweckmäßig diesen entsprechend der Bunkergröße zu dimensionieren. Des Weiteren kann ein breites Förderband eine größere Menge an zu transportierendem Schüttgut aufnehmen, wonach der Bunker schneller befüllbar ist.

In einer bevorzugten Ausführungsform wird die Erfindung weitergebildet dadurch gekennzeichnet, dass die Fördervorrichtung, die Verfahreinrichtung, die Steuerung und die Sensoreinheit in der Weise zusammenwirken, dass das Schüttgut mittels der Fördereinrichtung innerhalb des Bunkers verteilt wird, die Sensoreinheit die Füllstandshöhe des Schüttguts innerhalb des Bunkers detektiert und ein entsprechendes Signal bereitstellt, und die Steuerung eine Position und eine Laufrichtung der Fördervorrichtung entsprechend dem detektierten Signal der Sensoreinheit steuert. Die Steuerung ist geeignet, mit den detektierten Signalen verschiedener Sensoren einen Befüllungszustand des Bunkers zu erfassen. Die Kombination aus einer Steuerung, die entsprechend eines aktuellen Befüllungszustands eines Bunkerinnenraums mit einer Fördervorrichtung kommuniziert, ist besonders zweckmäßig zur Erzielung einer gleichmäßigen und vollständigen Befüllung des Bunkers. Die gleichmäßige Befüllung ist erforderlich zur Erzielung eines möglichst hohen Befüllungszustands des Bunkers, um den Platz des Bunkerinnenraums optimal auszunutzen. Ein weiterer Grund ist die ausgeglichene Verteilung verschiedengroßer Späne innerhalb des Bunkers. Bei der Entnahme der Späne aus dem Bunker werden die Späne bei der Herstellung von Spanplatten im Folgeprozess entsprechend der Reihenfolge der Entnahme aus dem Bunker auf einem sogenannten Formband angeordnet. Hierbei ist es wichtig eine gleichmäßige Spangrößenverteilung zu generieren, um bei der fertigen Spanplatte über das gesamte Produkt gleichmäßige mechanische Eigenschaften zu erzielen. Hinsichtlich der Vorteile u wird auf die vorstehenden Erläuterungen der erfindungsgemäßen Speichereinrichtung verwiesen.

Gemäß einem weiteren Aspekt der Erfindung wird die eingangs genannte Aufgabe durch ein Verfahren gemäß Anspruch 12 zur Steuerung einer gleichmäßigen Befüllung eines Bunkers einer Speichereinrichtung gelöst durch Ansteuern der Verfahreinrichtung der Fördervorrichtung zum Bewegen der Fördervorrichtung in eine erste Position zum Einstellen einer Abwurfposition des Schüttguts und/oder Ansteuern des reversierbaren Antriebs des Förderbands der Fördervorrichtung in eine erste Laufrichtung zum Einstellen einer Abwurfposition des Schüttguts.

Ferner ist bevorzugt, dass Schritt Ermitteln einer Füllstandshöhe des Schüttguts im Bunker mittels mindestens einer der Sensoreinheiten, dem Schritt Einbringen von Schüttgut in den Bunker, vorangestellt sein kann und/oder Schritte Einbringen von Schüttgut in den Bunker, Ermitteln einer Füllstandshöhe des Schüttguts im Bunker mittels mindestens einer der Sensoreinheiten, Ansteuern der Verfahreinrichtung der Fördervorrichtung zum Bewegen der Fördervorrichtung in eine erste Position zum Einstellen einer Abwurfposition des Schüttguts und/oder Ansteuern des reversierbaren Antriebs des Förderbands der Fördervorrichtung in eine erste Laufrichtung zum Einstellen einer Abwurfposition des Schüttguts beliebig oft wiederholbar sind. Dies ist vorteilhaft, um vor einem Produktionsstart, oder auch während der Produktion, den Füllstand des Systems ermitteln zu können, um daraufhin den Förderstrom des Schüttguts in den Bunker oder aus dem Bunker entsprechend zu steuern.

Hinsichtlich der Vorteile des erfindungsgemäßen Verfahrens und seiner Ausführungsformen wird auf die vorstehenden Erläuterungen der erfindungsgemäßen Speichereinrichtung verwiesen.

Die Erfindung wird nachstehend anhand eines bevorzugten Ausführungsbeispiels anhand der Figuren beschrieben.

Diese zeigen:
- Fig.1:: eine Seitenansicht einer Speichereinrichtung
- Fig. 2a -d:: Seitenansichten der Speichereinrichtung mit aufsteigendem Befüllungsgrad
- Fig. 3:: eine Schnittansicht auf die Speichereinrichtung
- Fig. 4:: eine Seitenansicht der Speichereinrichtung mit Sensoren
- Fig. 5:: eine Draufsicht auf die Speichereinrichtung mit Sensoren und Steuerung

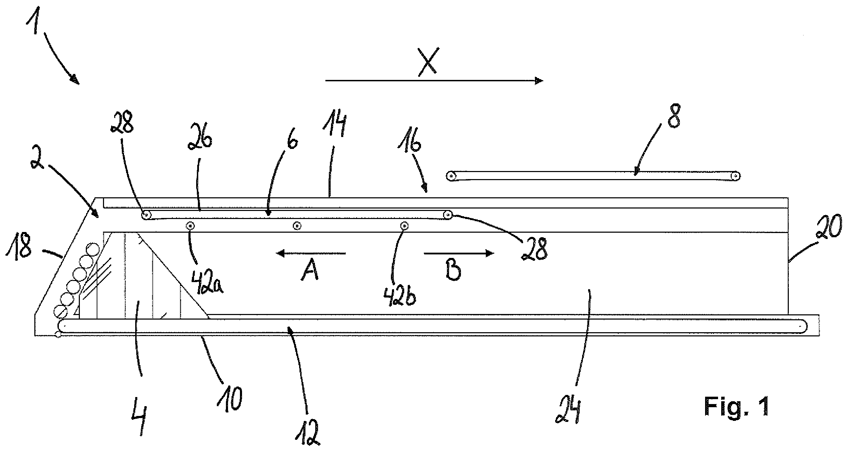

Fig. 1 zeigt eine Seitenansicht einer Speichereinrichtung 1. Die Speichereinrichtung 1 umfasst einen Bunker 2 sowie eine erste Fördervorrichtung, die innerhalb des Bunkers 2 angeordnet und für einen Transport von Schüttgut 4 eingerichtet ist. Erfindungsgemäß ist diese Fördervorrichtung als Gurtförderer 6 ausgebildet.

Eine weitere zweite Fördervorrichtung ist außerhalb, vorzugsweise oberhalb, des Bunkers 2 angeordnet und wird im Folgenden als Zuführfördervorrichtung 8 bezeichnet. Eine weitere dritte Fördervorrichtung ist an einem Bunkerboden 10 angeordnet und in diesem bevorzugten Ausführungsbeispiel als Kettengurtförderer 12 ausgebildet.

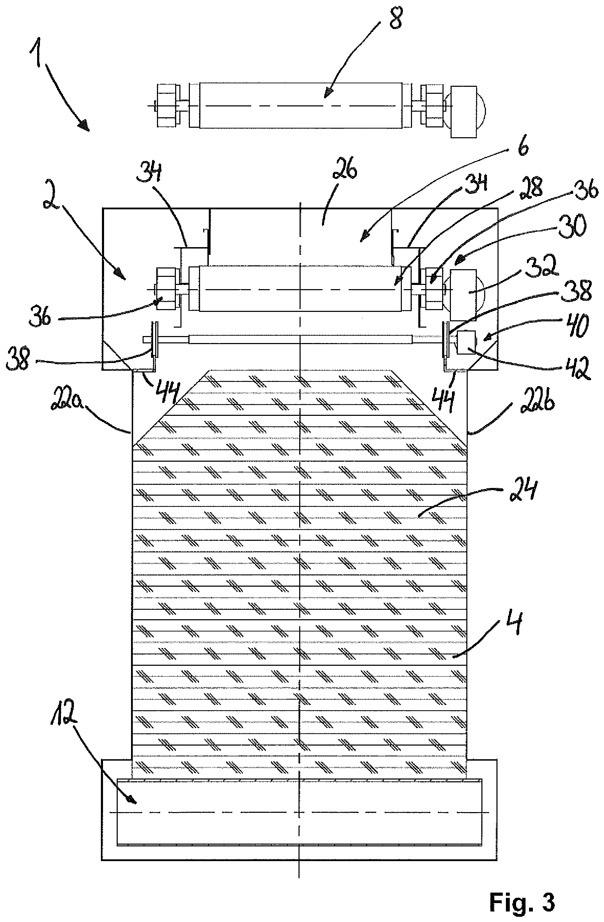

Der Bunker 2 dient der Aufnahme und Speicherung des Schüttguts 4 und umfasst eine Öffnung, die sich vorzugsweise an einer Bunkerdecke 14 befindet und dort einen Einlass 16 zur Aufnahme des Schüttguts 4 bildet. Des Weiteren weist der Bunker 2 eine vordere Wand 18 und eine hintere Wand 20, die über eine Längsachse des Bunkers 2 miteinander verbunden sind, auf. Die Bunkerdecke 14, die vordere und hintere Wand (18, 20) sowie der Bunkerboden 10 und zwei Seitenwände 22 (Fig. 3) begrenzen einen Bunkerinnenraum 24.

Der erfindungsgemäße Gurtförderer 6 ist mindestens teilweise unterhalb des Einlasses 16 angeordnet oder dorthin verfahrbar. Der Gurtförderer 6 weist ein Förderband 26, ein Gurtband, auf. Das Gurtband ist als Endlosförderband ausgebildet und wird über mindestens zwei Umlenkrollen 28 geführt. Der Gurtförderer 6 ist dazu eingerichtet, Schüttgut 4 von der Zuführfördervorrichtung 8 über den Einlass 16 des Bunkers 2 aufzunehmen und innerhalb des Bunkers 2 zu transportieren und zu verteilen. Der Gurtförderer 6 ist mit einem reversierbaren Antrieb 30 ausgestattet. Unter reversierbar ist gemäß dieser Erfindung zu verstehen, dass das Förderband 26 eine Drehrichtungsumkehr erfahren kann. Das bedeutet, dass das Schüttgut 4 in eine erste Richtung A und in eine zweite entgegengesetzte Richtung B transportierbar ist.

Figur 3 zeigt eine Schnittansicht auf die Speichereinrichtung 1. In diesem erfindungsgemäßen Ausführungsbeispiel wird das Endlosförderband mit Hilfe eines Getriebemotors 32 über eine Antriebstrommel reibschlüssig angetrieben. Es ist sowohl eine Ausführungsform mit Anordnung von Motor und Getriebe innerhalb der Antriebstrommel als auch außerhalb der Antriebstrommel ausführbar. Die Drehrichtung des Förderbands 26 ist mit einem Drehrichtungsgeber, der mit dem Antrieb 30 gekoppelt ist, bestimmbar.

Weiterhin ist der Gurtförderer 6 auf einem Verfahrwagen 34 gelagert, vorzugsweise mit einer Stehlagergehäuseeinheit 36. Der Verfahrwagen 34 weist eine Mehrzahl von Rollen 38 auf. Mit dem Verfahrwagen 34 ist der Gurtförderer 6 an eine Verfahreinrichtung 40 gekoppelt. Die Verfahreinrichtung 40, die einen Verfahrantrieb 42 aufweist, ermöglicht ein Verfahrendes Gurtförderers 6 auf mindestens einer Schiene 44 innerhalb des Bunkers 2. Vorzugsweise verfügt die Verfahreinrichtung 40 über zwei Schienen (44a, 44b), die sich entlang der horizontalen Achse X des Bunkers 2 erstrecken. Die Schienen (44a, 44b) sind vorzugsweise orthogonal zu der horizontalen Achse X beabstandet voneinander, sodass sich die erste Schiene 44a benachbart zu der ersten Seitenwand 22a und die zweite Schiene 44b benachbart zu der zweiten Seitenwand 22b befinden. Die Verfahreinrichtung 40 verfügt über vorzugsweise zwei Verfahrantriebe 42a und 42b. Wobei der erste Verfahrantrieb 42a benachbart zu einem ersten Ende des Gurtförderers 6 und der zweite Verfahrantrieb 42b benachbart zu einem zweiten Ende des Gurtförderers 6 angeordnet ist. Die Schienen (44a, 44b) bilden eine Führung für die Rollen 38 des Verfahrwagens 34. Hierbei bilden zwei orthogonal zu der horizontalen Achse X gegenüberliegende Rollen 38 ein Rollenpaar, die mit einer Welle miteinander verbunden sind. Der Verfahrantrieb (42a, 42b) treibt mittels der Welle die Mehrzahl von Rollen 38 an. Der Verfahrweg erstreckt sich vorzugsweise und im Wesentlichen entlang einer horizontalen Achse X über die gesamte Länge des Bunkers 2. Zweckmäßig ist der Gurtförderer 6 in einem oberen Bereich innerhalb des Bunkers 2 angeordnet zur Erzielung einer maximalen Füllhöhe innerhalb des Bunkers 2. Die Anordnung der horizontalen Achse X ist erfindungsgemäß so zu verstehen, dass sie im Wesentlichen eine Parallele zu der Längsachse des Bunkers 2 bildet. Hierbei ist der Gurtförderer 6 in zwei entgegengesetzte Richtungen (A, B) auf den Schienen 44 beweglich gelagert. D. h. der Gurtförderer 6 ist von der vorderen Bunkerwand 18 entlang im Wesentlichen der gesamten Länge des Bunkers 2 zu der hinteren Bunkerwand 20 verfahrbar. In einer erfindungsgemäßen Weiterbildung der Erfindung ist aber auch denkbar, dass der Gurtförderer 6 in eine Richtung quer zum Bunker 2 und/oder entlang einer Bunkerhöhe verfahrbar ist. Mit Hilfe von Weg-Sensoren, die mit dem Gurtförderer 6 gekoppelt sind, ist die Position des Gurtförderers 6 innerhalb des Bunkers 2 bestimmbar.

Entlang der Achse X sind beliebig viele Abwurfpositionen für das Schüttgut 4 von dem Gurtförderer 6 einstellbar. Die Abwurfpositionen sind anhand der Parameter der Drehrichtung des Förderbands 26 sowie der Verfahrposition des Gurtförderers 6 einstellbar. Der Bunker 2 kann somit von der vorderen Wand 18 bis zu der hinteren Wand 20 gleichmäßig befüllt werden.

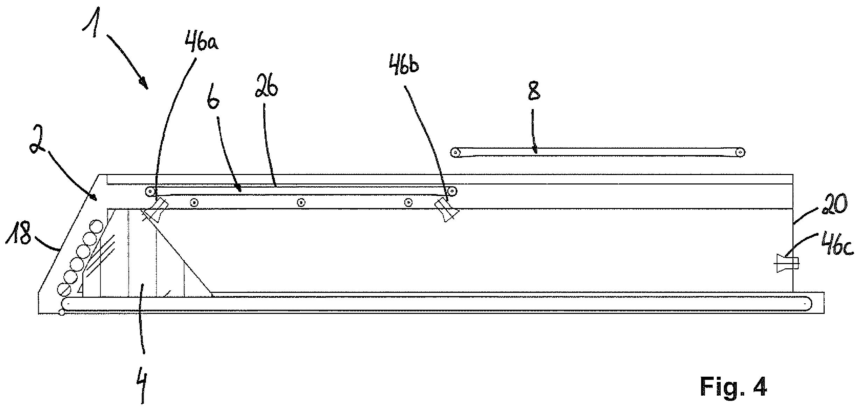

Die Befüllung erfolgt erfindungsgemäß mithilfe von Sensoreinheiten (46a, 46b, 46c). Figur 4 zeigt eine erfindungsgemäße Anordnung der Sensoreinheiten (46a, 46b, 46c) innerhalb des Bunkers 2. Hierbei ist eine erste Sensoreinheit 46a und eine zweite Sensoreinheit 46b an den Gurtförderer 6 gekoppelt. Besonders bevorzugt ist jeweils eine erste Sensoreinheit 46a an einem ersten Ende des Gurtförderers 6 und eine zweite Sensoreinheit 46b an einem zweiten Ende des Gurtförderers 6 befestigt. Die Sensoreinheiten (46a, 46b) sind derart ausgerichtet, dass eine Füllstandshöhe des Schüttguts 4 entsprechend der für das Schüttgut 4 eingestellten Abwurfposition des Gurtförderers 6 bestimmbar ist. Die Sensoreinheiten (46a, 46b) sind folglich mit dem Gurtförderer 6 verfahrbar, und dazu eingerichtet, eine Füllstandshöhe in Abhängigkeit von der Verfahrposition des Gurtförderers 6 zu ermitteln. Der Begriff Füllstandshöhe schließt erfindungsgemäß auch Begriffe ein, die für eine Bestimmung einer Menge an Schüttgut 4 verwendbar sind, insbesondere ein Befüllungsgrad, ein Füllvolumen, eine Füllbreitenverteilung und ein Abstand zwischen Füllstandshöhe und Gurtförderer 6. Vorzugsweise erfolgt die Bestimmung der Füllstandshöhe mittels Radarsensoren. In diesem erfindungsgemäßen Ausführungsbeispiel ist eine weitere Sensoreinheit 46c, insbesondere Radarsensor, an der hinteren Bunkerwand 20 angebracht. Dieser ist dazu eingerichtet, einen Befüllungsgrad des Bunkers 2 entlang der Bunkerlänge zu bestimmen. Die Sensoreinheiten 46 sind vorzugsweise als Radarsensoren ausgebildet, alternativ könnten auch beispielsweise optische Sensoren eingesetzt werden.

Die Sensoreinheiten (46a, 46b, 46c) sind signalleitend mit einer Steuerung 48 verbunden. Die Steuerung 48 kann beispielsweise an der Bunkeraußenseite positioniert sein. Die Steuerung 48 ist außerdem mit der Verfahreinrichtung 40 des Gurtförderers 6 und den Weg-Sensoren signalleitend verbunden. Des Weiteren ist die Steuerung 48 signalleitend mit dem Drehrichtungsgeber an der Antriebstrommel des Gurtförderers 6 sowie dem reversierbaren Antrieb 30 verbunden.

Das erfindungsgemäße Verfahren zur Steuerung einer gleichmäßigen Befüllung eines Bunkers 2 einer Speichereinrichtung 1 wird nachfolgend anhand der Figuren 1 bis 4 beschrieben. Die Bunkerbefüllung erfolgt gemäß einem bevorzugten Ausführungsbeispiel von einem vorderen Bereich benachbart zu der vorderen Wand 18 bis zu einer hinteren Wand 20 entlang der Länge des Bunkers 2. Es sei erwähnt, dass die nachfolgend beschriebene detaillierte Ausführungsweise des Verfahrens eine mögliche Variante von vielen Varianten für eine gleichmäßige Befüllung eines Bunkers 2 mit den Mitteln nach Anspruch 18 und 19 ist.

Fig. 1 zeigt einen ersten Befüllungszustand des Bunkers 2. Der erste Befüllungszustand wird erreicht mittels einer Aufgabe des Schüttguts 4 auf die Zuführfördervorrichtung 8, die das Schüttgut 4 zu einer Abwurfposition über dem Einlass 16 des Bunkers 2 transportiert. Beim Abwerfen des Schüttguts 4 von der Zuführfördervorrichtung 8 ist der Gurtförderer 6 unterhalb des Einlasses 16 angeordnet, um das Schüttgut 4 von der Zuführfördervorrichtung 8 aufzunehmen.

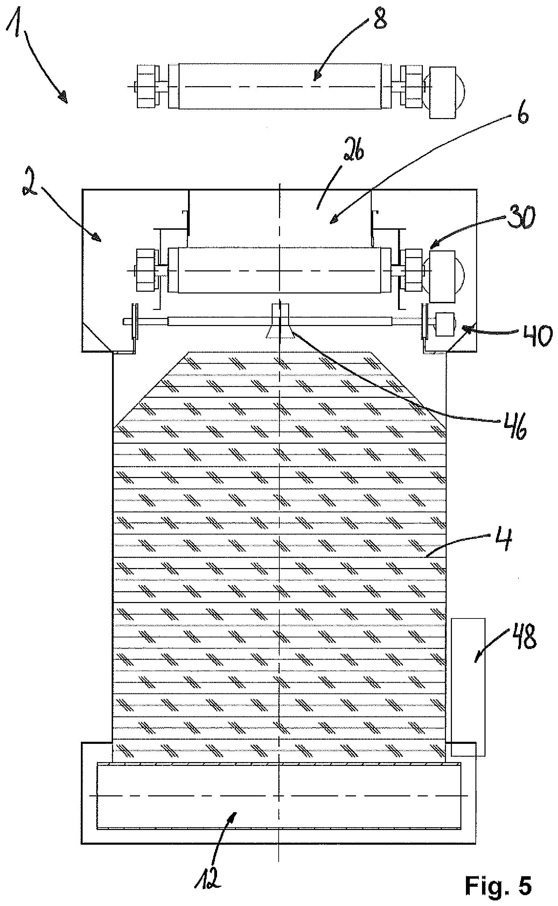

Die Steuerung 48 (Fig. 5) steuert anhand von detektierten Signalen der Sensoreinheiten (46a, 46b, 46c) in nachfolgend beschriebener Weise den Gurtförderer 6 und/ oder die Verfahreinrichtung 40 des Gurtförderers 6.

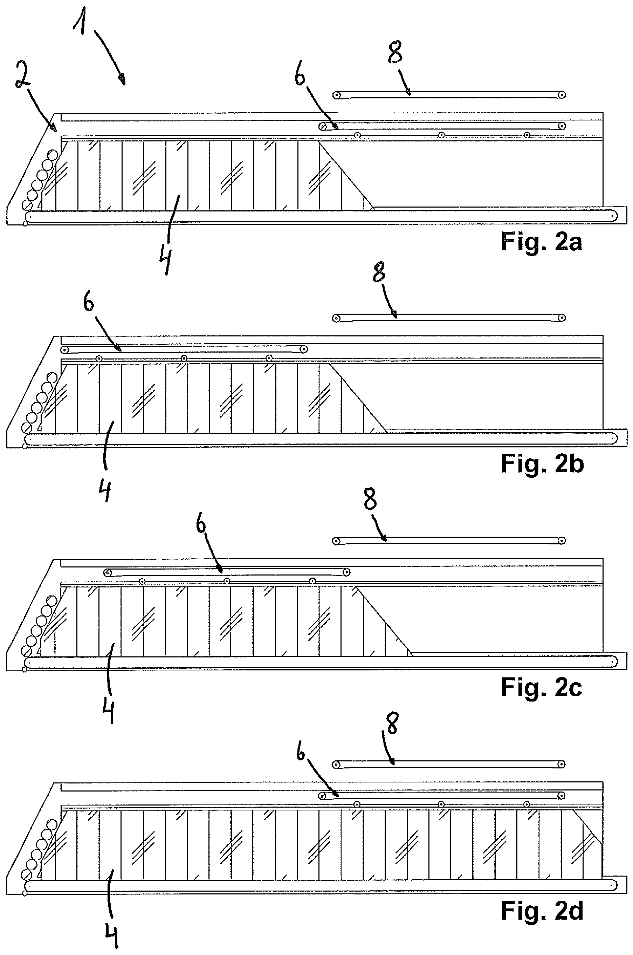

Zunächst wird ein Signal der Sensoreinheit 46c (Fig. 4) ermittelt, wonach der Befüllungszustand entlang der Länge des Bunkers 2 bestimmbar ist. Gemäß Fig. 1 ist ein erster Befüllungszustand erreicht, wonach der Gurtförderer 6 in einer ersten Verfahrposition verfahren wird. Zum weiteren Auffüllen des Bunkers 2 mit Schüttgut 4 und zum Erreichen eines zweiten Befüllungszustands (Fig. 2a) ist die Förderrichtung des Gurtförderers 6 in Richtung A eingestellt.

In einem folgenden Schritt ermittelt die Sensoreinheit 46a (Fig. 4) ein Signal, insbesondere eine Distanz zu dem aktuellen Schüttguthaufen, an einer Abwurfposition des Gurtförderers 6. Unter einer Abwurfposition ist ein Bereich zu verstehen, der sich in der jeweiligen Förderrichtung unterhalb des Gurtförderers 6 erstreckt, der je nach transportiertem Schüttgut 4 und Förderbandgeschwindigkeit variabel ist. Zur Erzielung bestmöglicher Messergebnisse der Sensoreinheiten (46a, 46b, 46c), ist die Ausrichtung entsprechend anzupassen.

Entsprechend dem detektierten Signal der Sensoreinheit 46a wird die erste Verfahrposition beibehalten, wenn die Distanz zu dem Schüttguthaufen größer als ein Vorgabewert ist. Das Schüttgut 4 wird dann an der eingestellten Abwurfposition von dem Gurtförderer 6 abgeworfen. Ist das detektierte Signal kleiner oder gleich des Vorgabewerts, verfährt der Gurtförderer 6 mithilfe der Verfahreinrichtung 40 in Richtung B, bis das detektierte Signal an der Abwurfposition größer als der Vorgabewert ist. Das Schüttgut 4 wird dann an der eingestellten Abwurfposition von dem Gurtförderer 6 abgeworfen, bis das detektierte Signal dem Vorgabewert entspricht. Diese Schritte werden solange wiederholt bis ein Befüllungszustand und eine Verfahrposition gemäß Figur 2a erreicht ist.

An dieser Verfahrposition des Gurtförderers 6 (Fig. 2a) ist der maximale Verfahrweg des Gurtförderers 6 in Richtung B erreicht. Zur weiteren Befüllung des Bunkers 2 entlang seiner Länge verfährt der Gurtförderer 6 in die erste Verfahrposition zurück (Fig. 2b). In einem weiteren Schritt wird in einer zweiten Abwurfposition in Richtung B, die durch eine Drehrichtungsumkehr des Förderbands 26 erreicht wird, entsprechend dem Prinzip der ersten Abwurfposition des Gurtförderers 6 verfahren. D. h., ist das detektierte Signal der Sensoreinheit 46b (Fig. 4) größer als ein Vorgabewert, wird das Schüttgut 4 an der Abwurfposition von dem Gurtförderer 6 abgeworfen. Bei Erreichen des Vorgabewerts verfährt der Gurtförderer 6 mithilfe der Verfahreinrichtung 40 in Richtung B, bis das detektierte Signal größer als der Vorgabewert ist (Fig. 2c). Diese Schritte werden bei Bedarf solange wiederholt bis ein Befüllungszustand und eine Verfahrposition gemäß Figur 2d erreicht ist. Gemäß Figur 2d hat der Bunker 2 seinen maximalen Befüllungszustand erreicht.

### Bezugszeichenliste:

- 1: Speichereinrichtung
- 2: Bunker
- 4: Schüttgut
- 6: Gurtförderer
- 8: Zuführfördervorrichtung
- 10: Bunkerboden
- 12: Kettengurtförderer
- 14: Bunkerdecke
- 16: Einlass
- 18: vordere Wand
- 20: hintere Wand
- 22: Seitenwand (22a, 22b)
- 24: Bunkerinnenraum
- 26: Förderband
- 28: Umlenkrolle
- 30: reversierbarer Antrieb
- 32: Getriebemotor
- 34: Verfahrwagen
- 36: Stehlagergehäuseeinheit
- 38: Rollen
- 40: Verfahreinrichtung
- 42: Verfahrantrieb (42a, 42b)
- 44: Schienen (44a, 44b)
- 46: Sensoreinheit (46a, 46b, 46c)
- 48: Steuerung

- A: eine erste Richtung
- B: eine zweite Richtung
- X: horizontale Achse

## Patentansprüche

1. Speichereinrichtung (1) für Schüttgut (4), insbesondere Holzspäne, umfassend
einen Bunker (2) zum Aufnehmen des Schüttguts (4),
eine Fördervorrichtung zum Transportieren des Schüttguts (4),
wobei der Bunker (2) einen Einlass (16) aufweist, der im oberen Bereich des Bunkers (2) angeordnet ist,
wobei die Fördervorrichtung innerhalb des Bunkers (2) angeordnet und ein Gurtförderer (6) zum Transportieren des Schüttguts (4) ist,
wobei der Gurtförderer (6) mindestens teilweise unter dem Einlass (16) in dem Bunker (2) angeordnet und mittels einer Verfahreinrichtung (40) der Speichereinrichtung (1) innerhalb des Bunkers (2) verfahrbar ist,
wobei mindestens eine Sensoreinheit (46a, 46b, 46c) der Speichereinrichtung (1) zum Detektieren eines örtlichen Befüllungszustands innerhalb des Bunkers (2) angeordnet ist,
**dadurch gekennzeichnet, dass** mindestens eine der Sensoreinheiten (46a, 46b) an dem Gurtförderer (6) und/oder der Verfahreinrichtung (40) befestigt ist zum Detektieren einer Füllstandshöhe relativ zu der Position des Gurtförderers (6).

2. Speichereinrichtung (1) nach Anspruch 1,
**dadurch gekennzeichnet, dass** die Speichereinrichtung (1) eine außerhalb des Bunkers (2) angeordnete Zuführfördervorrichtung (8) zum Zuführen des Schüttguts (4) auf den Gurtförderer (6) durch den Einlass (16) des Bunkers (2) aufweist.

3. Speichereinrichtung (1) nach Anspruch 1,
**dadurch gekennzeichnet, dass** die Verfahreinrichtung (40) einen Antrieb (42) und Schienen (44), auf denen der Gurtförderer (6) beweglich gelagert ist, aufweist.

4. Speichereinrichtung (1) nach mindestens einem der vorgehenden Ansprüche, **dadurch gekennzeichnet, dass** der Gurtförderer (6) einen reversierbaren Antrieb (30) zum Transportieren des Schüttguts (4) in eine erste Richtung (A) und in eine zweite entgegengesetzte Richtung (B) umfasst.

5. Speichereinrichtung (1) nach Anspruch 4,
**gekennzeichnet durch** eine Steuerung (48) zur Steuerung von Komponenten der Speichereinrichtung (1), die signalleitend mit dem Gurtförderer (6), der Verfahreinrichtung (40) und mindestens einem Sensor (46a, 46b, 46c) gekoppelt ist.

6. Speichereinrichtung (1) nach Anspruch 5,
**dadurch gekennzeichnet, dass** eine Position des Gurtförderers (6) mittels mindestens einem Weg-Sensor entlang einer vorzugsweise horizontalen Achse X innerhalb des Bunkers (2) bestimmbar und mittels der Steuerung (48) veränderbar ist.

7. Speichereinrichtung (1) nach mindestens einem der vorgehenden Ansprüche, **dadurch gekennzeichnet, dass** ein zweiter Gurtförderer innerhalb des Bunkers (2) angeordnet ist.

8. Speichereinrichtung (1) nach Anspruch 7,
**dadurch gekennzeichnet, dass** der erste und zweite Gurtförderer im Wesentlichen entlang einer horizontalen Achse X hintereinander oder nebeneinander angeordnet und verfahrbar sind.

9. Speichereinrichtung (1) nach Anspruch 1,
**dadurch gekennzeichnet, dass** jeweils eine erste Sensoreinheit (46a) an einem Ende des Gurtförderers (6) befestigt ist und eine zweite Sensoreinheit (46b) an einem zweiten Ende des Gurtförderers (6) befestigt ist zum Detektieren der Füllstandshöhe an einer ersten Abwurfposition und an einer zweiten Abwurfposition des Schüttguts (4) von dem Gurtförderer (6), wobei vorzugsweise mindestens eine der Sensoreinheiten (46c) an einer Bunkerwand befestigt ist und/oder dass mindestens eine der Sensoreinheiten (46a, 46b, 46c) ein Radarsensor ist.

10. Speichereinrichtung (1) nach mindestens einem der vorgehenden Ansprüche, **dadurch gekennzeichnet, dass** der Gurtförderer (6) ein Förderband (26) mit einer Breite aufweist, die mindestens 50 % der Breite des Bunkers (2) beträgt, bevorzugt eine Breite größer als 75 % der Bunkerbreite und besonders bevorzugt eine Breite größer 85 % der Bunkerbreite aufweist.

11. Speichereinrichtung (1) nach mindestens einem der vorstehenden Ansprüche, **gekennzeichnet durch** eine Steuerung (48) zum Steuern der Fördervorrichtung und der Verfahreinrichtung (40), wobei
die mindestens eine Sensoreinheit (46a, 46b, 46c), mit der Steuerung (48) kommuniziert,
und wobei
die Fördervorrichtung, die Verfahreinrichtung (40), die Steuerung (48) und die Sensoreinheit (46a, 46b, 46c) in der Weise zusammenwirken, dass
a) das Schüttgut (4) mittels der Fördereinrichtung innerhalb des Bunkers (2) verteilt wird,
b) die Sensoreinheit (46a, 46b, 46c) die Füllstandshöhe des Schüttguts (4) innerhalb des Bunkers (2) detektiert und ein entsprechendes Signal bereitstellt, und
c) die Steuerung (48) eine Position und eine Laufrichtung der Fördervorrichtung entsprechend dem detektierten Signal der Sensoreinheit (46a, 46b, 46c) steuert.

12. Verfahren zur Steuerung einer gleichmäßigen Befüllung eines Bunkers (2) einer Speichereinrichtung (1), nach mindestens einem der vorgehenden Ansprüche 4-11,
mit den Schritten:
a) Einbringen von Schüttgut (4) in den Bunker (2),
b) Ermitteln einer Füllstandshöhe des Schüttguts (4) im Bunker (2) mittels mindestens einer der Sensoreinheiten (46a, 46b, 46c),
c) Ansteuern der Verfahreinrichtung (40) der Fördervorrichtung zum Bewegen der Fördervorrichtung in eine erste Position zum Einstellen einer Abwurfposition des Schüttguts (4) und/oder
d) Ansteuern des reversierbaren Antriebs (30) des Förderbands (26) der Fördervorrichtung in eine erste Laufrichtung zum Einstellen einer Abwurfposition des Schüttguts (4).

13. Verfahren nach Anspruch 12,
**dadurch gekennzeichnet, dass** Schritt b) Schritt a) vorangestellt sein kann und/oder Schritte a-d) beliebig oft wiederholbar sind.

## Claims

1. A storage apparatus (1) for bulk material (4), in particular wood chips, including
a bunker (2) for receiving the bulk material (4),
a conveyor apparatus for transporting the bulk material (4),
wherein that the bunker (2) has an inlet (16) arranged in an upper region of the bunker (2), wherein the conveyor apparatus is arranged within the bunker (2) and is a belt conveyor (6) for transporting the bulk material (4),
wherein the belt conveyor (6) is arranged at least partially under the inlet (16) in the bunker (2) and is displaceable within the bunker (2) by means of a displacement device (4) of the storage apparatus (1),
wherein at least one sensor unit (46a, 46b, 46c) of the storage apparatus (1) for detecting a local filling state in the bunker (2) is arranged within the bunker (2),
**characterised in that** at least one of the sensor units (46a, 46b) is fixed to the belt conveyor (6) and/or the displacement device (40) for detecting a filling level height relative to the position of the belt conveyor (6).

2. A storage apparatus (1) according to claim 1
**characterised in that** the storage apparatus (1) has a feed conveyor apparatus (8) arranged outside the bunker (2) for feeding the bulk material (4) on to the belt conveyor (6) through the inlet (16) of the bunker (2).

3. A storage apparatus (1) according to claim 1
**characterised in that** the displacement device (40) has a drive (42) and rails (44) on which the belt conveyor (6) is moveably mounted.

4. A storage apparatus (1) according to one of the preceding claims **characterised in that** the belt conveyor (6) has a reversible drive (30) for transporting the bulk material (4) in a first direction (A) and in a second opposite direction (B).

5. A storage apparatus (1) according to claim 4
**characterised by** a control means (48) for control of components of the storage apparatus, that is coupled in signal-conducting relationship to the belt conveyor (6), the displacement device (40) and at least one sensor (46a, 46b, 46c).

6. A storage apparatus (1) according to claim 5
**characterised in that** a position of the belt conveyor (6) can be determined by means of at least one travel sensor along a preferably horizontal axis X within the bunker (2) and can be altered by means of the open-loop control means (48).

7. A storage apparatus (1) according to at least one of the preceding claims **characterised in that** a second belt conveyor is arranged within the bunker (2).

8. A storage apparatus (1) according to claim 7
**characterised in that** the first and second belt conveyors are arranged in mutually juxtaposed or mutually successive relationship and are displaceable substantially along a horizontal axis X.

9. A storage apparatus (1) according to claim 1
**characterised in that** a respective first sensor unit (42a) is fixed at one end of the belt conveyor (6) and a second sensor unit (42b) is fixed at a second end of the belt conveyor (6) for detecting the filling level height at a first discharge position and at a second discharge position of the bulk material (4) from the belt conveyor (6), wherein preferably at least one of the sensor units (46c) is fixed to a bunker wall and/or at least one of the sensor units (46a, 46b, 46c) is a radar sensor.

10. A storage apparatus (1) according to at least one of the preceding claims **characterised in that** the belt conveyor (6) has a conveyor belt (26) of a width which is at least 50% of the width of the bunker (2), preferably a width greater than 75% of the bunker width and particularly preferably a width greater than 85% of the bunker width.

11. A storage apparatus (1) according to at least one of the preceding claims, **characterised by**
a control means (48) for controlling the conveyor apparatus and the displacement device (40),
wherein the at least one sensor unit (46a, 46b, 46c) communicating with the control means (48), and wherein
the conveyor apparatus, the displacement device (40), the control means (48) and the sensor unit (46a, 46b, 46c) cooperate in such a way that
a) the bulk material (4) is distributed within the bunker (2) by means of the conveyor apparatus,
b) the sensor unit (46a, 46b, 46c) detects the filling level height of the bulk material (4) within the bunker (2) and provides a corresponding signal, and
c) the control means (48) controls a position and a direction of travel of the conveyor apparatus corresponding to the detected signal of the sensor unit (46a, 46b, 46c).

12. A method of controlling uniform filling of a bunker (2) of a storage apparatus (1) according to at least one of the preceding claims 4-11,
comprising the steps:
a) introducing bulk material (4) into the bunker, and
b) ascertaining a filling level height of the bulk material (4) in the bunker (2) by means of at least one of the sensor units (46a, 46b, 46c),
c) actuating the displacement device (40) of the conveyor apparatus for moving the conveyor apparatus into a first position for setting a discharge position for the bulk material (4), and/or
d) actuating the reversible drive (30) of the conveyor belt (26) of the conveyor apparatus in a first direction of travel for setting a discharge position for the bulk material (4).

13. A method according to claim 12
**characterised in that** step b) can precede step a) and/or steps a-d) can be repeated as often as may be desired.

## Revendications

1. Système de stockage (1) pour un produit en vrac (4), en particulier des copeaux de bois, comprenant une trémie (2) pour recevoir le produit en vrac (4),
un dispositif de convoyage pour transporter le produit en vrac (4),
dans lequel la trémie (2) présente une entrée (16) qui est disposée dans la région supérieure de la trémie (2),
dans lequel le dispositif de convoyage est disposé à l'intérieur de la trémie (2) et est un convoyeur à bande (6) pour transporter le produit en vrac (4),
dans lequel le convoyeur à bande (6) est disposé au moins partiellement sous l'entrée (16) dans la trémie (2) et peut être déplacé à l'intérieur de la trémie (2) au moyen d'un système de déplacement (40) du système de stockage (1),
dans lequel au moins une unité de capteur (46a, 46b, 46c) du système de stockage (1) est disposée pour détecter un état de remplissage local à l'intérieur de la trémie (2),
**caractérisé en ce qu'**au moins une des unités de capteurs (46a, 46b) est fixée au convoyeur à bande (6) et/ou au système de déplacement (40) pour détecter une hauteur de niveau par rapport à la position du convoyeur à bande (6).

2. Système de stockage (1) selon la revendication 1,
**caractérisé en ce que** le système de stockage (1) présente un dispositif de convoyage d'alimentation (8) disposé à l'extérieur de la trémie (2) pour amener le produit en vrac (4) sur le convoyeur à bande (6) par l'entrée (16) de la trémie (2).

3. Système de stockage (1) selon la revendication 1,
**caractérisé en ce que** le système de déplacement (40) présente un entraînement (42) et des rails (44) sur lesquels le convoyeur à bande (6) est monté de manière mobile.

4. Système de stockage (1) selon au moins l'une des revendications précédentes,
**caractérisé en ce que** le convoyeur à bande (6) comprend un entraînement réversible (30) pour transporter le produit en vrac (4) dans une première direction (A) et dans une deuxième direction (B) opposée.

5. Système de stockage (1) selon la revendication 4,
**caractérisé par** une commande (48) pour la commande de composants du système de stockage (1), qui est couplée par conduction de signal au convoyeur à bande (6), au système de déplacement (40) et à au moins un capteur (46a, 46b, 46c).

6. Système de stockage (1) selon la revendication 5,
**caractérisé en ce qu'**une position du convoyeur à bande (6) peut être déterminée au moyen d'au moins un capteur de course le long d'un axe X de préférence horizontal à l'intérieur de la trémie (2) et peut être modifiée au moyen de la commande (48).

7. Système de stockage (1) selon au moins l'une quelconque des revendications précédentes,
**caractérisé en ce qu'**un deuxième convoyeur à bande est disposé à l'intérieur de la trémie (2).

8. Système de stockage (1) selon la revendication 7,
**caractérisé en ce que** les premier et deuxième convoyeurs à bande sont disposés et déplaçables sensiblement le long d'un axe horizontal X l'un derrière l'autre ou l'un à côté de l'autre.

9. Système de stockage (1) selon la revendication 1,
**caractérisé en ce que** respectivement une première unité de capteur (46a) est fixée à une extrémité du convoyeur à bande (6) et une deuxième unité de capteur (46b) est fixée à une deuxième extrémité du convoyeur à bande (6) pour détecter la hauteur de niveau à une première position de décharge et à une deuxième position de décharge du produit en vrac (4) du convoyeur à bande (6), dans lequel de préférence au moins l'une des unités de capteur (46c) est fixée à une paroi de trémie et/ou qu'au moins l'une des unités de capteur (46a, 46b, 46c) est un capteur radar.

10. Système de stockage (1) selon au moins l'une des revendications précédentes,
**caractérisé en ce que** le convoyeur à bande (6) présente une bande transporteuse (26) avec une largeur qui est égale à au moins 50 % de la largeur de trémie (2), présente de préférence une largeur supérieure à 75 % de la largeur de trémie et de manière particulièrement préférée une largeur supérieure à 85 % de la largeur de trémie.

11. Système de stockage (1) selon au moins l'une des revendications précédentes, **caractérisé par** une commande (48) pour commander le dispositif de convoyage et le système de déplacement (40),
dans lequel l'au moins une unité de capteur (46a, 46b, 46c) communique avec la commande (48),
et dans lequel le dispositif de convoyage, le système de déplacement (40), la commande (48) et l'unité de capteur (46a, 46b, 46c) interagissent de manière à ce que
a) le produit en vrac (4) soit réparti à l'intérieur de la trémie (2) au moyen du système de convoyage,
b) l'unité de capteur (46a, 46b, 46c) détecte la hauteur de niveau du produit en vrac (4) à l'intérieur de la trémie (2) et fournisse un signal correspondant, et
c) la commande (48) commande une position et un sens de marche du dispositif de convoyage en fonction du signal détecté de l'unité de capteur (46a, 46b, 46c).

12. Procédé pour la commande d'un remplissage uniforme d'une trémie (2) d'un système de stockage (1), selon au moins l'une des revendications précédentes 4-11, avec les étapes :
a) d'introduction d'un produit en vrac (4) dans la trémie (2),
b) de détermination d'une hauteur de niveau du produit en vrac (4) dans la trémie (2) au moyen d'au moins l'une des unités de capteur (46a, 46b, 46c),
c) de commande du système de déplacement (40) du dispositif de convoyage pour mettre en mouvement le dispositif de convoyage dans une première position pour régler une position de décharge du produit en vrac (4) et/ou
d) de commande de l'entraînement réversible (30) de la bande transporteuse (26) du dispositif de convoyage dans un premier sens de marche pour régler une position de décharge du produit en vrac (4).

13. Procédé selon la revendication 12,
**caractérisé en ce que** l'étape b) peut être précédée de l'étape a) et/ou les étapes a-d) peuvent être répétées autant de fois que nécessaire.
